# EUROPÄISCHE PATENTSCHRIFT

(11) **EP 3 213 630 B1**
(45) Veröffentlichungstag und Bekanntmachung des Hinweises auf die Patenterteilung: **14.10.2020**
(21) Anmeldenummer: 17158780.1
(22) Anmeldetag: 01.03.2017
(51) Int. Cl.: A01K 29/00, A01K 7/06, A01K 9/00

(54) **TRÄNKEIMER**
FEEDING BUCKET
ABREUVOIR SEAU

(30) Priorität: 02.03.2016 DE 202016101129 U; 11.11.2016 DE 102016121665
(43) Veröffentlichungstag der Anmeldung: 06.09.2017
(73) Patentinhaber: H I K O GmbH, 89081 Ulm (DE)
(72) Erfinder: Hinterkopf, Martin, 89081 Ulm (DE)
(74) Vertreter: Baur & Weber Patentanwälte PartG mbB

(56) Entgegenhaltungen:
- DE-A1- 19 524 496
- DE-B3-102011 105 853
- DE-U1-202014 103 535
- US-A- 2 280 410
- US-A- 5 809 934
- US-A- 6 079 361
- US-B1- 8 336 495

## Beschreibung

Die Erfindung betrifft einen Tränkeimer, insbesondere zur Aufzucht von Tieren, wie z. B. Kälber oder Lämmer.

Tränkeinrichtungen in Form eines Eimers sind aus dem Stand der Technik bereits bekannt. So ist in der DE 8712611 U1 ein Eimer zum Tränken von Tieren beschrieben, der einen Saugzapfen an einer die Eimerwand durchdringenden Durchführung und eine Einrichtung zum Einhängen des Eimers in eine Tragvorrichtung aufweist, wobei die Einrichtung zum Einhängen wenigstens je einen Durchbruch in der Eimerwand auf der Seite des Saugzapfens und der gegenüber liegenden Seite und wenigstens einen Durchbruch in einer unterhalb des Eimerbodens liegenden Randzone aufweist.

Derartige Tränkeimer haben sich in der landwirtschaftlichen Praxis, insbesondere zum Tränken von Kälbern und Lämmern seit vielen Jahrzehnten bewährt und werden auch von zahlreichen anderen Herstellern angeboten. So bietet die Firma Albert Kerbel GmbH unter der Artikel-Nr. 14260 einen Kälbertränkeeimer an, der aus einem milchig-weißen Kunststoffmaterial besteht.

In der DE 10 2011 105 853 B2 ist eine Ventilanordnung für eine Viehtränke gezeigt, die einen Saugnuckel und einen Steckhalter zur Befestigung am Behälter umfasst. Der Behälter ist dabei als klassischer Tränkeimer mit abgeflachten Vorder- bzw. Rückseiten ausgebildet.

Die DE 20 2014 103 535 U1 der Albert Kerbl GmbH beschäftigt sich mit einer Ventilanordnung an einem Tränkeimer, wobei hier ein Befestigungssystem mit einem Klemmflansch beschrieben wird. Die Ventilanordnung wird an einem Tränkeimer befestigt, über dessen Material jedoch keinerlei Aussagen getroffen werden.

In der US 5,809,934 A wird eine Tränke beschrieben, die einen Hauptbehälter aufweist, an den sich an der Unterseite ein Trog anschließt. Der Trog wird aus dem Hauptbehälter über ein Ventil mit Flüssigkeit gefüllt, so dass ein Tier aus dem Trog trinken kann. Der Hauptbehälter weist auf einer Seitenfläche ein längliches Sichtfenster auf, das mit Markierungen versehen ist und einen Blick ins Innere des Hauptbehälters gestattet. Hierdurch kann ein Füllstand im Inneren des Hauptbehälters durch den Tierbesitzer kontrolliert werden, so dass auf einfache Weise festgestellt werden kann, ob das Tier Flüssigkeit aufnimmt oder nicht.

In der DE 195 24 496 A1 wird ein Tränkestand beschrieben, bei dem eine gegen eine Kraft auslenkbare Tränkeplatte mit darauf montiertem Saugnuckel vorgesehen ist. Hierbei ist angegeben, eine der Seitenbegrenzungen des Tränkestands transparent zu halten, um das Tier beim Tränkeabruf gut beobachten zu können und Probleme beim Saugen am Nuckel erkennen zu können.

In der US 6,079,361 A wird ein Trinksystem für Tiere beschrieben, das einen Vorratsbehälter aufweist, und mit seiner Unterseite in eine Tränke eingeführt wird. Der Vorratsbehälter weist entsprechende Abgabemittel auf und wird zur Tränke über Dichtungen geführt. Der Vorratsbehälter kann aus Plastik gefertigt sein.

In der US 8,336,495 B1 wird ein flexibler faltbarer flüssigkeitsdichter Behälter beschrieben, der aus wärmeleitenden Materialien besteht. Der Behälter ist aus einem transparenten Material gefertigt. Auch die US 2,280,410 zeigt einen flexiblen Behälter.

Ausgehend von diesen bekannten Tränkeimern hat sich der Erfinder nun die Aufgabe gestellt, die Benutzerfreundlichkeit eines Tränkeimers bei einer gelegentlich vorzunehmenden Füllstandkontrolle in einem Stall während der Aufzucht von Tieren weiter zu erhöhen.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Tränkeimer zum Tränken von Tieren, insbesondere bei der Aufzucht von Kälbern oder Lämmern, geschaffen, der auf einer Seitenwand eine Öffnung zur Aufnahme eines Saugzapfens aufweist und auf der der Öffnung gegenüberliegenden Seite wenigstens einen Durchbruch zur Befestigung des Tränkeimers aufweist, wobei die Eimerwand an der der Öffnung zugewandten Seite und an der dem wenigstens einen Durchbruch zugewandten Seite jeweils abgeflacht sind, wobei die Eimerwand des Tränkeimers wenigstens abschnittsweise transparent ist, wobei der Transparenzgrad so gewählt ist, dass ein Füllstand einer Flüssigkeit im Inneren des Tränkeimers von außen durch die Eimerwand hindurch erkennbar ist.

Der Tränkeimer ist vollständig aus dem transparenten Material gefertigt. Durch Beimischung von einem Farbstoff oder Farbstoffen zum transparenten Kunststoffmaterial ist der Tränkeimer eingefärbt, wobei die Farbsättigung so gewählt ist, dass ein Füllstand einer Flüssigkeit im Tränkeimer erkennbar ist.

Die erfindungsgemäße Lösung stellt somit einen Tränkeimer bereit, der eine Füllstandskontrolle beispielsweise beim Tränken von Kälbern und Lämmern mit Milch während der Aufzuchtsphase ermöglicht, ohne dabei in das Innere des Eimers blicken zu müssen. Demnach kann auch aus größerer Entfernung der Füllstand von Tränkeimern kontrolliert werden, so dass das zeitaufwändige Inspizieren einzelner Tränkeimer entfallen kann. Dies führt zu einem erheblichen Zeitvorteil in der landwirtschaftlichen Praxis, wobei insbesondere auch erreicht werden kann, dass der Tränkeimer auch außerhalb eines Laufstalls oder dergleichen kontrolliert werden kann. Somit ist es möglich, sowohl Füllstandsinformationen als auch Kontrolle über die aufgenommene Flüssigkeitsmenge ohne größeren Zeitaufwand beschaffen zu können.

Der Tränkeimer ist demnach vollständig aus dem transparenten Kunststoffmaterial in einem Spritzgussverfahren gefertigt, wodurch Herstellungskosten reduziert werden können. In wiederum anderen Ausführungen kann es jedoch möglich sein, durch die Verwendung unterschiedlicher Kunststoffmaterialien eine lediglich teilweise transparente Ausgestaltung zu erzeugen.

Gemäß einer weiteren Ausführungsform der Erfindung ist die Öffnung in der Nähe zu einer Unterseite des Tränkeimers angeordnet.

Derartige Tränkeimer tropfen in der Leerstellung aus, so dass keine Verschmutzungen auftreten bzw. reduziert werden. Die Erfindung lässt sich auch bei so ausgestalteten Tränkeimern einsetzen.

Gemäß einer weiteren Ausführungsform der Erfindung ist die Öffnung in der Nähe zu einer Oberseite des Tränkeimers angeordnet.

Die Positionierung der Öffnung in der Nähe einer Oberseite des Tränkeimers führt zu einem Erschweren des Saugens bei dem Tier, so dass der Saugprozess länger andauert und folglich anstrengender ist. Dies führt zu mehr Speichelfluss und damit besserer Verdauung. Die Erfindung lässt sich auch bei derartig ausgestalteten Tränkeimern einsetzen.

Gemäß einer weiteren Ausführungsform der Erfindung sind mehrere, insbesondere drei oder fünf Öffnungen vorgesehen.

Demnach werden Tränkeimer geschaffen, die eine unterschiedliche Zahl bzw. Position von Saugzapfen aufweisen, so dass je nach gewünschtem Einsatzgebiet die jeweils passende Konfiguration ausgewählt sein kann.

Gemäß einer weiteren Ausführungsform der Erfindung ist der Tränkeimer aus Polyolefinen gefertigt.

Polyolefine, insbesondere Polypropylene in Form von Homopolymere oder Copolymerere, erlauben einerseits einen hohen Transparenzgrad und sind zum anderen aber auch mechanisch stabil, so dass ein Tränkeimer geschaffen werden kann, der mechanischen Beanspruchungen, wie sie üblicherweise im Stallbetrieb vorkommen, standhalten kann.

Der Tränkeimer kann eine Füllmenge von bis zu 10 Litern, vorzugsweise ungefähr 9 Liter, aufweisen.

Gemäß einer weiteren Ausführungsform der Erfindung weist der Tränkeimer eine Befestigungsöffnung zur Aufnahme eines Markierungsclips auf. Dabei kann der Markierungsclips werkzeuglos einbringbar und lösbar sein.

Gemäß einer weiteren Ausführungsform der Erfindung ist der Tränkeimer eingefärbt, wobei der Farbsättigung so gewählt ist, dass ein Füllstand einer Flüssigkeit im Tränkeimer erkennbar ist.

Die beiden zuletzt genannten Ausführungsformen der Erfindung ermöglichen die Individualisierung des Tränkeimers.

Nachfolgend wird ein Ausführungsbeispiel anhand der Zeichnung näher erläutert. Es zeigen:
- Fig. 1: schematisch ein Tränkeimer gemäß einem Ausführungsbeispiel der Erfindung in einer perspektivischen Seitenansicht,
- Fig. 2: der Tränkeimer aus Fig. 1 in gefülltem Zustand in einer perspektivischen Seitenansicht,
- Fig. 3A und 3B: ein Markierungsclip zur Verwendung mit einem erfindungsgemäßen Tränkeimer,
- Fig. 4: ein Tränkeimer gemäß einem Ausführungsbeispiel der Erfindung in einer perspektivischen Seitenansicht mit einem Markierungsclip, und
- Fig. 5: ein Tränkeimer gemäß einem Ausführungsbeispiel der Erfindung in einer perspektivischen Seitenansicht bei Einbringen des Markierungsclip.

In den Figuren sind gleiche oder funktional gleich wirkende Bauteile mit den gleichen Bezugszeichen versehen.

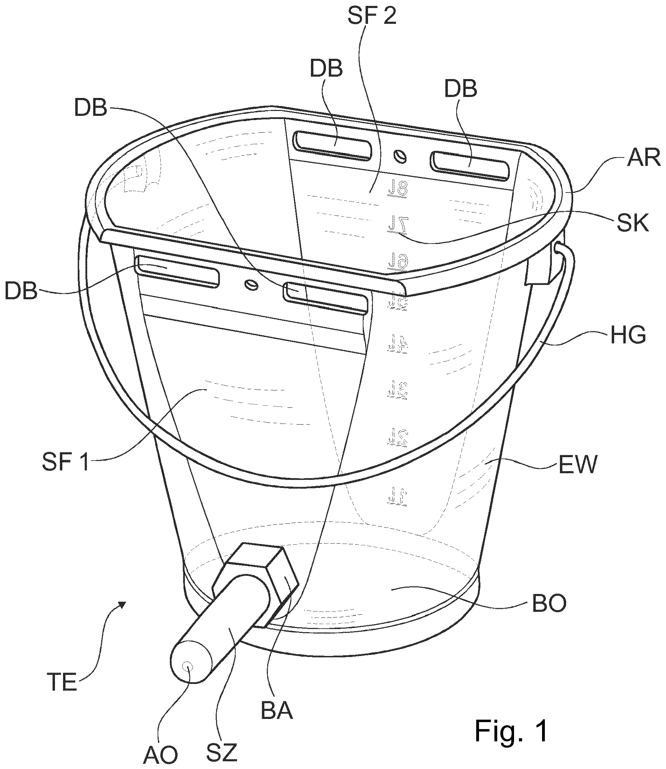

In Fig. 1 ist in einer perspektivischen Seitenansicht ein Ausführungsbeispiel eines Tränkeimers TE gezeigt. Der Tränkeimer weist im gezeigten Ausführungsbeispiel einen kreisförmigen oder nahezu kreisförmigen Boden BO auf, von dem sich eine Eimerwand EW bis zu einem oberen Abschlussring AR erstreckt. Auf einer ersten Seitenfläche SF1 und einer gegenüber liegenden zweiten Seitenfläche SF2 ist die Eimerwand EW jeweils abgeflacht, um eine einfachere Wandmontage zu ermöglichen.

Zur Montage des Tränkeimers TE sind am oberen Ende unterhalb des Abschlussrings AR mehrere Durchbrüche DB vorgesehen, die zum Aufhängen des Tränkeimers TE genutzt werden können. Die Durchbrüche DB können dabei in entsprechende hakenförmige Vorsprünge an einer Stallwand oder einem Stallgitter eingreifen. Darüber hinaus weist der Tränkeimer TE auf fachübliche Weise einen Haltegriff HG auf, der in Form eines schwenkbaren Bügels auf den den Seitenflächen SF1 und SF2 gegenüber liegenden Enden angeordnet ist.

Der Tränkeimer TE kann beispielsweise so ausgestaltet sein, dass eine Flüssigkeitsmenge von ca. 9 Litern eingebracht werden kann. Die genaue Form des Eimers ist jedoch nicht festgelegt, so dass beispielsweise auch Tränkeimer TE mit einem elliptischen oder eckigen Boden BO, mit einem unterschiedlich gestalteten Abschlussring AR oder mit einer anderen geometrischen Form der Eimerwand von der vorliegenden Erfindung umfasst werden. Ebenso ist bezüglich der Gestaltung und Lage der mehreren Durchbrüche DB eine Vielzahl von Variationsmöglichleiten gegeben, so dass die gezeigte spezielle Ausführungsform des Tränkeimers TE nicht einschränkend interpretiert werden sollte.

Desweiteren weist die Eimerwand EW im Bereich der zweiten Seitenfläche SF2 eine Skala SK auf, die beispielsweise während des Herstellens des Tränkeimers TE im Spritzgussverfahren erzeugt werden kann. Es ist selbstverständlich ebenfalls möglich, auch auf der ersten Seitenfläche SF1 eine derartige Skala SK anzubringen. Ebenso kann die Skala SK auch aufgedruckt sein oder mittels einer Klebefolie bereitgestellt werden.

Die Entnahme von Flüssigkeit aus dem Tränkeimer TE wird über einen Saugzapfen SZ, an dessen Ende sich eine Austrittsöffnung AO befindet, auf fachübliche Weise durchgeführt. Der Saugzapfen SZ tritt durch eine Öffnung, die in Fig. 1 hinter dem gezeigten Sechskant-Befestigungsanschluss BA zu liegen kommt, durchgeführt.

In anderen Ausführungsformen ist es möglich, mehrere, beispielsweise bis zu fünf Öffnungen für Saugzapfen SZ vorzusehen oder die Öffnung in Richtung des Abschlussrandes AR anzuordnen, so dass diese im oberen Bereich der Eimerwand EW liegt.

Der Tränkeimer TE ist wenigstens im Bereich der Eimerwand EW aus einem transparenten Kunststoffmaterial, das beispielsweise als Polyolefine gewählt sein kann, ausgeführt, wobei der Transparenzgrad des Kunststoffmaterials so gewählt ist, dass auch aus größerer Entfernung ein Füllstand einer Flüssigkeit im Tränkeimer TE erkennbar ist.

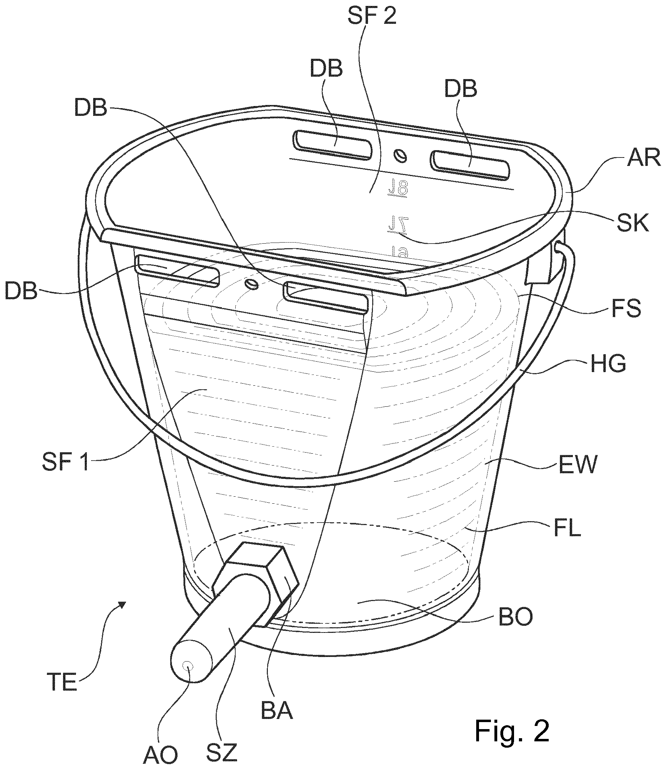

Die transparente Eigenschaft der Eimerwand EW wird in Bezug auf Fig. 2 nochmals näher erläutert. Man erkennt, dass der Füllstand FS der Flüssigkeit FL durch die Eimerwand EW hindurch scheint, so dass es nicht nötig ist, in das Innere des Tränkeimers TE blicken zu müssen, um den Füllstand erkennen zu können. Dazu ist der Transparenzgrad des Kunststoffmaterials größer als bei einer milchig-weißen Ausführung gewählt. Der Tränkeimer TE ist in dem gezeigten Ausführungsbeispiel vollständig aus dem transparenten Kunststoffmaterial in einem Spritzgussverfahren gefertigt. In wiederum anderen Ausführungen kann es jedoch möglich sein, durch die Verwendung unterschiedlicher Kunststoffmaterialien eine lediglich abschnittsweise transparente Ausgestaltung zu erzeugen.

In der landwirtschaftlichen Praxis hat es sich bewährt, jeweils einen bestimmten Eimer für beispielsweise ein Kalb zu verwenden, um Ansteckungsgefahren bei Krankheiten im Stall zu vermeiden. Dazu wurden bisher typischerweise unterschiedlich eingefärbte Eimer verwendet, so dass jedes Kalb einen individuellen Eimer zu gewiesen bekommt. Um diese Konzept auf den erfindungsgemäßen transparenten Tränkeimer TE zu übertragen, ist es daher vorgesehen dem transparenten Kunststoffmaterial Farbstoffe beizumischen, so dass ein leicht eingefärbter aber dennoch transparenter Tränkeimer TE geschaffen wird, bei dem Transparenzgrad des Kunststoffmaterials und die Farbsättigung so gewählt sind, dass auch aus größerer Entfernung ein Füllstand einer Flüssigkeit im Tränkeimer TE erkennbar ist.

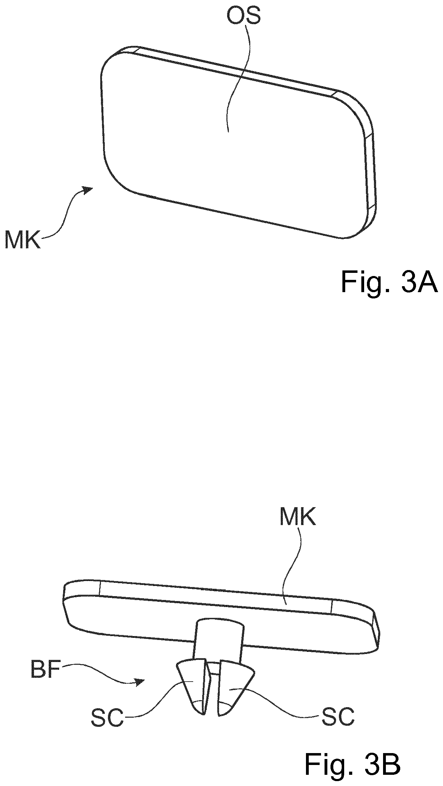

Unter Bezugnahme auf Fig. 3A und Fig. 3B wird eine weitere Möglichkeit zur Individualisierung des erfindungsgemäßen transparenten Tränkeimers TE beschrieben. Diese wird zusätzlich zu der soeben genannten Beimischung von einem Farbstoff oder Farbstoffen angewendet. Dazu wird ein Markierungsclip MK bereitgestellt, der auf seiner Oberseite OS entweder beschriftbar ist oder aber aus einem Satz unterschiedlich eingefärbter Markierungsclips auswählbar ist. Der Oberseite OS gegenüberliegend ist ein Befestigungsdorn BF ausgebildet, der als Rückhalteelement für eine werkzeuglos lösbare Befestigung sorgt, indem die beiden Schenkel SC zueinander gedrückt werden können.

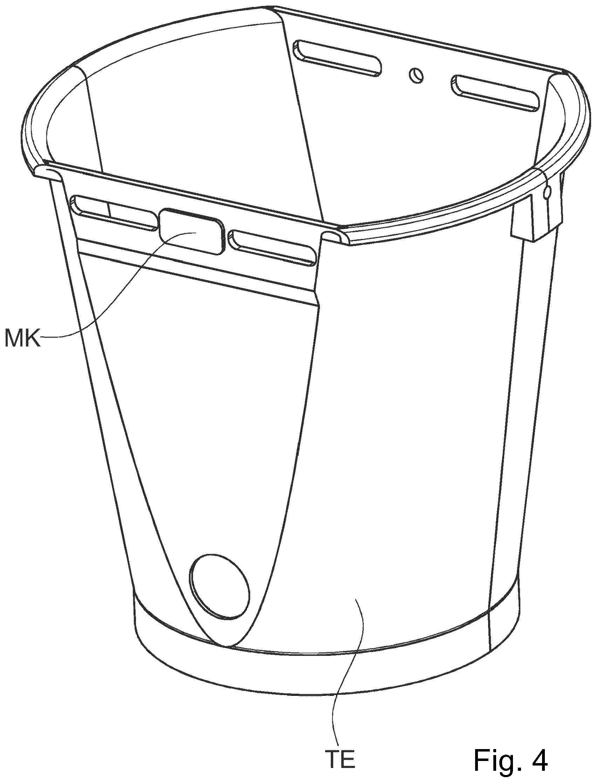

Der Markierungsclip MK ist am Tränkeimer TE befestigbar, wie in Fig. 4 gezeigt ist.

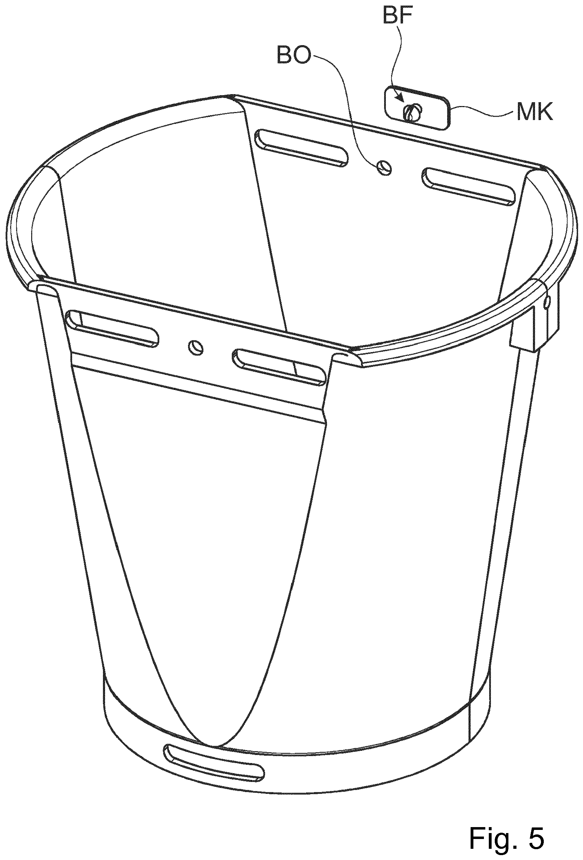

Dazu wird der Markierungsclip MK mittels des Befestigungsdorns BF in eine Befestigungsöffnung BO am Tränkeimer TE gesteckt, die mit der Form der Schenkel SC am Befestigungsdorns BF korrespondiert. Dies ist in Fig. 5 gezeigt ist.

Mittels des Markierungsclips MK ist es demnach möglich, mehrere Tränkeimer TE innerhalb eines Stalls zu individualisieren, so dass die oben erwähnte Ansteckungsgefahr bezüglich Krankheiten reduziert wird.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Tränkeimer zum Tränken von Tieren, insbesondere bei der Aufzucht von Kälbern oder Lämmern, der in einer Eimerwand (EW) eine Öffnung zur Aufnahme eines Saugzapfens (SZ) aufweist und auf der der Öffnung gegenüber liegenden Seite (SF2) wenigstens einen Durchbruch (DB) zur Befestigung des Tränkeimers (TE) aufweist, wobei die Eimerwand (EW) an der der Öffnung zugewandten Seite (SF1) und an der dem wenigstens einen Durchbruch (DB) zugewandten Seite (Sf2) jeweils abgeflacht sind, **dadurch gekennzeichnet, dass** die Eimerwand (EW) des Tränkeimers (TE) wenigstens abschnittsweise transparent ist, wobei der Transparenzgrad so gewählt ist, dass ein Füllstand (FS) einer Flüssigkeit (FL) im Inneren des Tränkeimers (TE) von außen durch die Eimerwand (EW) hindurch erkennbar ist, wobei der Tränkeimer (TE) vollständig aus einem transparenten Kunststoffmaterial gefertigt ist,
und dass der Tränkeimer mittels Beimischung von einem Farbstoff oder Farbstoffen zum transparenten Kunststoffmaterial eingefärbt ist, wobei die Farbsättigung so gewählt ist, dass ein Füllstand einer Flüssigkeit im Tränkeimer erkennbar ist.

2. Tränkeimer nach Anspruch 1, bei dem die Öffnung in der Nähe einer Unterseite des Tränkeimers (TE) angeordnet ist.

3. Tränkeimer nach Anspruch 1, bei dem die Öffnung in der Nähe einer Oberseite des Tränkeimers (TE) angeordnet ist.

4. Tränkeimer nach einem der Ansprüche 1 bis 3, bei dem mehrere, insbesondere drei oder fünf Öffnungen vorgesehen sind.

5. Tränkeimer nach einem der Ansprüche 1 bis 4, der eine Füllmenge von bis zu 10 Litern, vorzugsweise ungefähr 9 Liter, aufweist.

6. Tränkeimer nach einem der Ansprüche 1 bis 5, der aus Polyolefinen gefertigt ist.

7. Tränkeimer nach einem der Ansprüche 1 bis 6, der eine Befestigungsöffnung (BO) zur Aufnahme eines Markierungsclips (MK) aufweist.

8. Tränkeimer nach Anspruch 7, bei dem der Markierungsclip (MK) werkzeuglos einbringbar und lösbar ist.

9. Tränkeimer nach Anspruch 7 oder 8, bei dem der Markierungsclip (MK) auf seiner Oberseite (OS) beschriftbar ist.

10. Tränkeimer nach Anspruch 7 oder 8, bei dem der Markierungsclip (MK) aus einem Satz unterschiedlich eingefärbter Markierungsclips auswählbar ist.

11. Tränkeimer nach einem der Ansprüche 7 bis 10, bei dem am Markierungsclip (MK) von der Oberseite (OS) gegenüberliegend ein Befestigungsdorn (BF) ausgebildet ist.

12. Tränkeimer nach Anspruch 11, bei dem der Befestigungsdorn (BF) als Rückhalteelement in der Befestigungsöffnung (BO) am Tränkeimer (TE) für eine werkzeuglos lösbare Befestigung sorgt, indem zwei Schenkel (SC) zueinander gedrückt werden können.

## Claims

1. Drinking bucket for watering animals, in particular when rearing calves or lambs, which bucket has an opening for receiving a sucking teat (SZ) in a bucket wall (EW) and at least one aperture (DB) for fastening the drinking bucket (TE) on the side (SF2) opposite the opening, the bucket wall (EW) being flattened on the side (SF1) facing the opening and on the side (Sf2) facing the at least one aperture (DB) in each case, **characterized in that** the bucket wall (EW) of the drinking bucket (TE) is at least partially transparent, the degree of transparency being selected such that a fill level (FS) of a liquid (FL) inside the drinking bucket (TE) can be seen from the outside through the bucket wall (EW), the drinking bucket (TE) being made entirely of a transparent plastics material, and **in that** the drinking bucket is colored by adding a dye or dyes to the transparent plastics material, the color saturation being selected such that a fill level of a liquid in the drinking bucket can be seen.

2. Drinking bucket according to claim 1, wherein the opening is arranged near the bottom of the drinking bucket (TE).

3. Drinking bucket according to claim 1, wherein the opening is arranged near the top of the drinking bucket (TE).

4. Drinking bucket according to any of claims 1 to 3, wherein a plurality of openings are provided, in particular three or five.

5. Drinking bucket according to any of claims 1 to 4, which has a filling capacity of up to 10 liters, preferably approximately 9 liters.

6. Drinking bucket according to any of claims 1 to 5, which is made of polyolefins.

7. Drinking bucket according to any of claims 1 to 6, which has a fastening opening (BO) for receiving a marking clip (MK).

8. Drinking bucket according to claim 7, wherein the marking clip (MK) can be inserted and detached without tools.

9. Drinking bucket according to either claim 7 or claim 8, wherein the marking clip (MK) can be labeled on its upper face (OS).

10. Drinking bucket according to either claim 7 or claim 8, wherein the marking clip (MK) can be selected from a set of differently colored marking clips.

11. Drinking bucket according to any of claims 7 to 10, wherein a fastening dome (BF) is formed on the marking clip (MK) opposite from the upper face (OS).

12. Drinking bucket according to claim 11, wherein the fastening dome (BF), as a retaining element in the fastening opening (BO) on the drinking bucket (TE), ensures that the fastening can be detached without tools by it being possible for two legs (SC) to be pressed together.

## Revendications

1. Seau d'abreuvement destiné à l'abreuvement d'animaux, en particulier dans le cadre de l'élevage de veaux ou d'agneaux, lequel seau présente, dans une paroi de seau (EW), une ouverture destinée à recevoir une pointe d'aspiration (SZ), et au moins un passage (DB) du côté (SF2) opposé à l'ouverture, destiné à fixer le seau d'abreuvement (TE), la paroi de seau (EW) du côté (SF1) tourné vers l'ouverture et celle du côté (SF2) tourné vers l'au moins un passage (DB) étant chacune aplaties, **caractérisé en ce que** la paroi de seau (EW) du seau d'abreuvement (TE) est transparente au moins par sections, le degré de transparence étant sélectionné de manière à ce qu'un niveau de remplissage (FS) d'un liquide (FL) à l'intérieur du seau d'abreuvement (TE) soit visible de l'extérieur à travers la paroi de seau (EW), le seau d'abreuvement (TE) étant entièrement fabriqué à partir d'une matière plastique transparente, et **en ce que** le seau d'abreuvement est coloré par l'ajout d'un colorant ou de colorants à la matière plastique transparente, la saturation des couleurs étant sélectionnée de manière à ce qu'un niveau de remplissage d'un liquide soit visible dans le seau d'abreuvement.

2. Seau d'abreuvement selon la revendication 1, dans lequel l'ouverture est disposée près d'un côté inférieur du seau d'abreuvement (TE).

3. Seau d'abreuvement selon la revendication 1, dans lequel l'ouverture est disposée près d'un côté supérieur du seau d'abreuvement (TE).

4. Seau d'abreuvement selon l'une des revendications 1 à 3, dans lequel plusieurs, en particulier trois ou cinq ouvertures, sont prévues.

5. Seau d'abreuvement selon l'une des revendications 1 à 4, présentant une quantité de remplissage allant jusqu'à 10 litres, de préférence d'environ 9 litres.

6. Seau d'abreuvement selon l'une des revendications 1 à 5, lequel est fabriqué à partir de polyoléfines.

7. Seau d'abreuvement selon l'une des revendications 1 à 6, présentant une ouverture de fixation (BO) destinée à recevoir une pince de marquage (MK).

8. Seau d'abreuvement selon la revendication 7, dans lequel la pince de marquage (MK) peut être insérée et détachée sans outils.

9. Seau d'abreuvement selon la revendication 7 ou 8, dans lequel la pince de marquage (MK) peut recevoir une inscription sur son côté supérieur (OS).

10. Seau d'abreuvement selon la revendication 7 ou 8, dans lequel la pince de marquage (MK) peut être choisie parmi un ensemble de pinces de marquage de couleurs différentes.

11. Seau d'abreuvement selon l'une des revendications 7 à 10, dans lequel un dôme de fixation (BF) est formé sur la pince de marquage (MK) opposée au côté supérieur (OS).

12. Seau d'abreuvement selon la revendication 11, dans lequel le dôme de fixation (BF) agit en tant qu'élément de retenue dans l'ouverture de fixation (BO) sur le seau d'abreuvement (TE) pour une fixation démontable sans outils en pressant deux branches (SC) l'une contre l'autre.
